# EUROPEAN PATENT SPECIFICATION

(11) **EP 2 519 661 B1**
(45) Date of publication and mention of the grant of the patent: **22.03.2017**
(21) Application number: 10814714.1
(22) Date of filing: 28.12.2010
(51) Int. Cl.: C25B 1/04, C25B 1/12, C25B 9/06

(54) **ELECTROLYSER INCLUDING A "NUCLEUS-SHELL" CELL WITH A NUCLEUS BASED ON LOW-PERMITTIVITY DIELECTRIC MATERIALS**
ELEKTROLYSATOR MIT EINER »KERNSCHALEN -ZELLE MIT EINEM KERN AUF GRUNDLAGE DIEELEKTRISCHER MATERIALIEN MIT GERINGER DURCHLÄSSIGKEIT
ÉLECTROLYSEUR COMPRENANT UNE CELLULE À « ENCEINTE-NOYAU » AVEC UN NOYAU À BASE DE MATÉRIAUX DIÉLECTRIQUES À FAIBLE PERMITTIVITÉ

(30) Priority: 28.12.2009 IT PD20090394
(43) Date of publication of application: 07.11.2012
(73) Proprietor: Universita' Degli Studi Di Padova, 35122 Padova (IT); Strumenti Scientifici Cinel S.r.l., 35010 Vigonza Padova (IT)
(72) Inventor: DI NOTO, Vito, I-35010 Cadoneghe (IT); NEGRO, Enrico, I-31100 Treviso (TV) (IT); BONGIOVANNI, Sergio, I-35027 Noventa Padovana Padova (IT); BONGIOVANNI, Aldo, I-35027 Noventa Padovana Padova (IT); BONGIOVANNI, Enrico, I-35010 Vigonza Padova (IT); CAGLIARI, Marco, I-37051 Villafontana Verona (IT)
(74) Representative: Gervasi, Gemma
(86) International application number: PCT/IT2010/000516
(87) International publication number: WO 2011/080789

(56) References cited:
- EP-A2- 1 077 499
- US-A- 5 783 051

## Description

### Field of the invention

The invention concerns an electrolyser based on a cell housing an ionic membrane with a "nucleus-shell" configuration able to produce high pressure hydrogen from water.

### State of the art

In the current world industrial panorama, gaseous hydrogen is in high demand to develop several chemical and physical processes. The PEM electrolytic cells represent one of the most promising technologies introduced in the market in the last few years to produce gaseous hydrogen. The current electrolytic cells are based on proton exchange membranes. The most widely applied is based on Nafion, a perfluorosulfonic acid polymer. A platinum-based electrocatalytic layer is adhered to both sides of the membrane; this layer helps form the anodic electrode on one side and the cathode electrode on the other side. This assembly is named MEA (membrane-electrode assembly). Currently, to make traditional electrolytic cells, the MEA is in contact with two metal plates that work as current collectors. The market also offers electrolytic cells inside where a wide wire mesh is positioned between the MEA and the metal plate to favour the circulation of the reagents and reaction products. These meshes with different porosities (macro-porous) are named "gas diffusion layers" and form a structure with several cavities. These cavities consist of multi-branched channels whose capillary action guarantees a correct transportation either of reagents or reaction products obtained from the water electrolysis reaction. Where these capillary meshes are not present, the reagents and the reaction products are carried to the electrodes through ducts made on the current collectors. Hydrogen production is made by the water electrolysis process. This process takes advantage of the electrical power and the electrocatalysts to trigger the water splitting reaction. The half-reactions, which occur in the electrodes during the water electrolysis process, are as follows:

Cathode: 2 H⁺_{(aq)} + 2 e⁻ → H_{2(g)} (1)

Anode: 2 OH⁻_{(aq)} → O_{2(g)} + 4 e⁻ (2)

The global reaction is (3):

2 H₂O₍ₗ₎ → 2 H_{2(g)} + O_{2(g)} (3)

The electrolysis process (3) produces gaseous hydrogen and oxygen. In particular, by imposing across the electrolysis cell ΔV > 1.2 V and by flowing electric current through it, the reaction (2) occurs at the anode, whilst the reaction (1) occurs at the cathode. The membrane works both as a separator and as an electrolyte. This way, a proton current is created between the anode and the cathode and the products developed by the two electrodes remain separate. The electrolysis process will continue for as long as both electric power and water are supplied. A certain amount of water coming from the anode goes to the cathode together with the protons (electro-permeation process of water through the proton-conducting membrane). Thus, a part of the water that enters the anode from the supply connection is eliminated by the electro-permeation, humidifying the gaseous hydrogen current produced at the cathode. This device makes it possible to produce hydrogen "in situ" and avoids the need of storing large quantities of gas in cylinders. Storing hydrogen requires the use of very high pressure cylinders, usually from 200 to 800 bar, which must satisfy a large number of expensive safety regulations. Furthermore, even in the event of a limited consumption of H₂, storing in the cylinder requires the installation of very large tanks. Storing hydrogen in tanks has another disadvantage, which is the reduction of gas pressure due to its consumption (emptying of the device). This situation requires an automated modulation of pressure reducers to make a gas current available with a stable and constant pressure and flow rate. The devices that produce hydrogen "in situ" through electrolysis, named *"Hydrogen generators,* " prevent the user from having the above-listed disadvantages. In the hydrogen generators, gas is obtained by the water splitting reaction according to the electrolysis process (3). The obtained oxygen is dispersed in the environment. The need to produce hydrogen with a pressure higher than the atmospheric one requires the construction of cells able to work under pressure. This target can be achieved if the anode and cathode compartments are hermetically closed. The hermetic electrolytic cells, which have already been described in the scientific literature, require the use of wire meshes with large dimension pores (macro-porous meshes) to create a hollow structure that permits the transportation of gases and reagents. The use of these elements has a disadvantage as it can often cause a break in membrane, especially during the assembly operations of the different parts of the cell. In particular, when the contact pressure between the wire mesh and the membrane increases, the edges of the pores of the wire mesh can damage the membrane. A second inconvenience concerns the closing operation of the cell, which is generally performed by electrically conductive metal plates. In this case, an efficient electrical insulation of the mechanical parts (such as screws, etc.) must be created to avoid short-circuits between the anode and cathode. Another inconvenience of the above-described devices concerns the use of polymer-based seals (such as silicon, rubber, etc.) which are in direct contact with the membrane. The use of these components make the cell's assembly and disassembly difficult. In the cells for the traditional electrolysis we described above, the latest inconvenience concerns the high probability that the MEAs get pierced during the device operation. In these cases, the high current densities that pass through the cell seriously damage both the surfaces of the current collectors (wire meshes) and the metal plates; so that the superficial flatness of the electrodes is compromised as well as the electric contacts among the MEA, metal plate and wire mesh. Finally, the current flow through the cell produces heat through the Joule effect, due to the internal resistance of the cell. This phenomenon is responsible for the heating of the cell with a consequent dissipation of energy and reduction of the device's operational life. In the traditional electrolysis cell, these dissipation phenomena were solved by placing the metal plates in direct contact with the external environment. EP1077499 describes a nucleus-shell electrolyser cell having its nucleus based on a polymer. US5783051 describes an apparatus for producing hydrogen and oxygen having a pressure vessel surrounding a bipolar-type water electrolytic cell.

### Summary of the invention

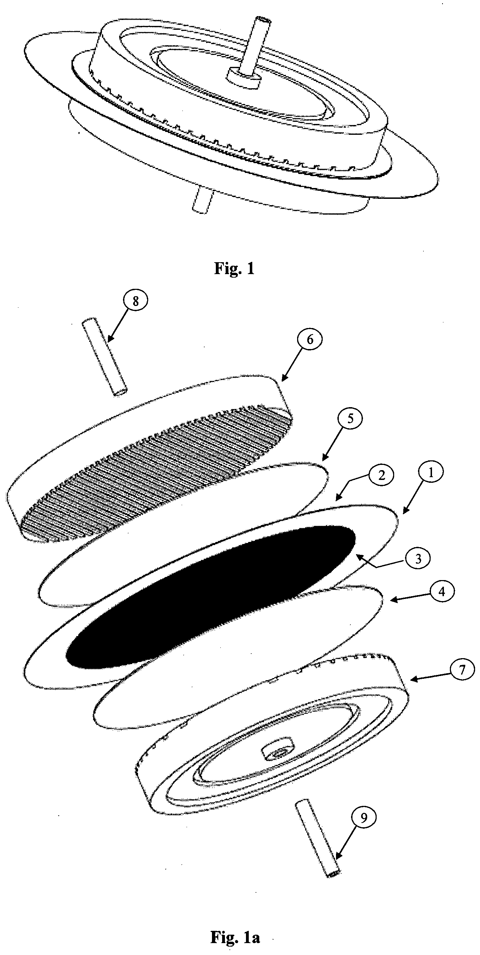

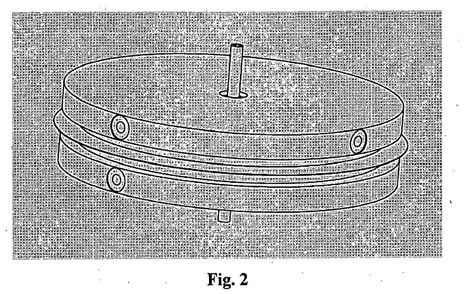

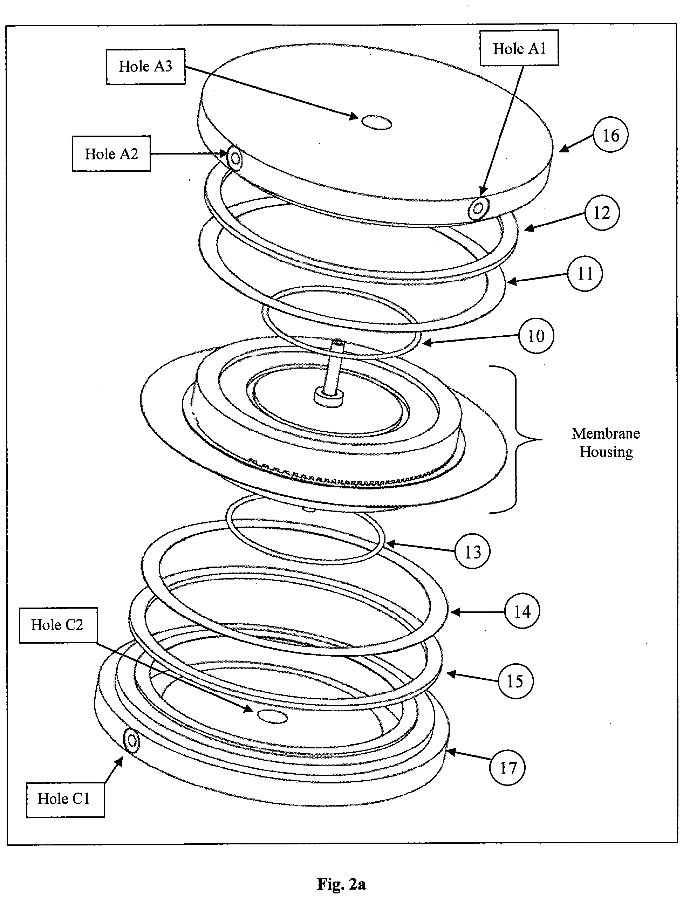

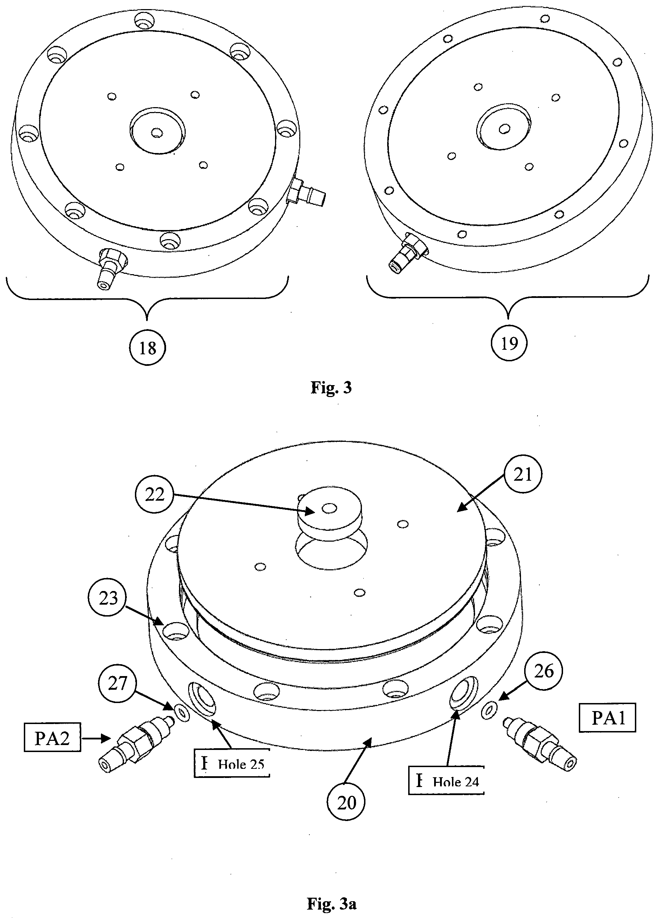

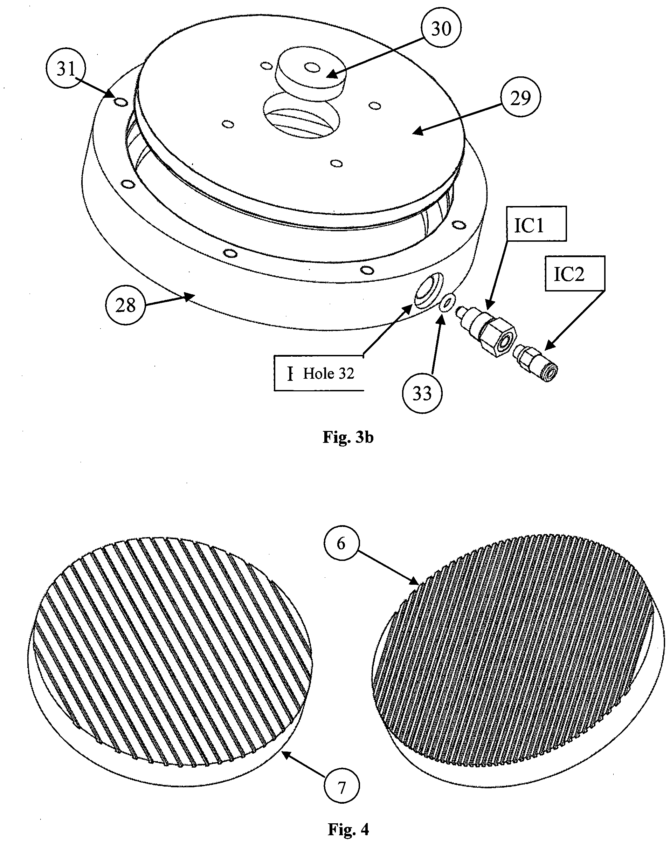

The invention describes an electrolysis cell of a "nucleus-shell" type according to claim 1 where the nucleus is made up of a dielectric material block that contains an electrode configuration. This device, in comparison with the current electrolysis cells on the market, reduces energy consumption, is safer to use and is mechanically more resistant. The cell's dielectric nucleus is shown in the exploded picture of Fig. 2a and consists of the following parts: 10, 13) O-Ring; 11, 14) rectangular section Teflon seal; 12, 15) rectangular section seal; 16, 17) circular part of dielectric material. It is essential that the nucleus structure is based on dielectric materials with the following characteristics: a) dielectric constant equal or lower than 2.8 at 25°C and 1 kHz; b) thermal conductivity between 0.2 and 1 W·(m·K)⁻¹. The cell nucleus is made up of dielectric material with the target of: a) solving the problems described before and which often occurred with traditional cells; b) guaranteeing the electrical insulation between the electrodes; c) creating a good pressure seal in the cell by means of the hermetic closing from the shell. The most suitable materials to make the cell nucleus are polytetrafluoroethylene (PTFE), polypropylene (PP), ceramic materials, inorganic-organic hybrid materials and others. The use of an electrode configuration included inside a dielectric material block shows further advantages such as: a) the limitation of possible electric dissipations; b) the cell maintenance in a thermal equilibrium to prevent the dissipation in the external environment of the thermal energy, which was produced by the high densities of the current existing between the electrodes. Storing this thermal energy improves the catalyst activity of the electrode material and the cell efficiency. This causes an important decrease of the system's global electrical resistance and an important increase of the entire device's efficiency. Furthermore, the electrical insulation of the cell's electrode configuration decreases the possibility of short-circuits in the current collectors, both during the assembly phase and the operational phase. The shell (external envelope) proposed in this invention has a structural function. In fact, it is used to seal the nucleus and avoid the loss of reagents and products. Thanks to the seal of the nucleus, guaranteed by the shell, it is possible to reach a pressure up to 20 barg. The shell also works as a support for the PA1 and PA2 connections shown in Fig. 3a and IC1 of Fig. 3b. The PA1, PA2 and IC1 connections allow respectively: a) water going in; b) oxygen and water going out; c) hydrogen and water going out. The introduction of a dielectric nucleus cell provides great advantages either from the economical point of view or the technical one in the event of breakages. In fact, in the event of the breakage of the membrane, the nucleus prevents the shell from being damaged. Therefore, the nucleus-shell compartment cell provides the possibility of replacing only the damaged part, reducing the repairing costs. Another innovation of the cell that we propose is made by the use of the current collectors based on titanium wire cloth (see 4, 5 in Fig. 1a). This component replaces the titanium meshes, which are usually used in the traditional cells, guaranteeing good electrical contact between the electrocatalyst and the control electronics, and improves the transportation of reagents and products to and from the active sites of the electrocatalyst. The good operation of this component is due to the porosity of the titanium cloth, which is about 80%. Finally, in the cell of this invention, the contacts between the ion-exchange membrane and the seals were eliminated so that the previously described problems were solved. Therefore, the use of a dielectric nucleus cell equipped with the above-described geometrical characteristics allows a clear separation between the MEA and the insulating compartment for facilitating device maintenance.

### Description of the invention

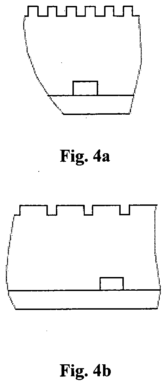

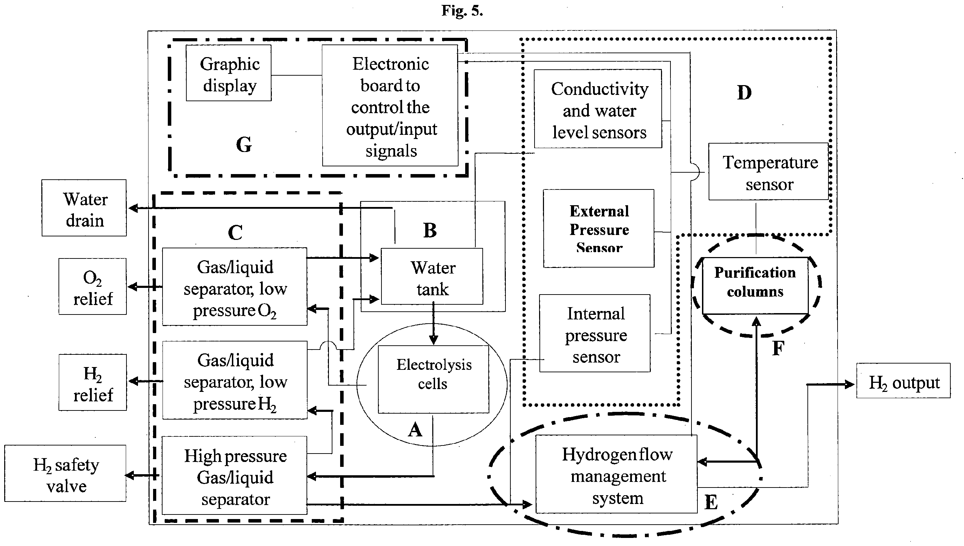

The innovation of the electrolytic cell is represented by the presence of a nucleus of dielectric material according to claim 1 that contains the electrode configuration (membrane housing) made by two current collectors and an ion-conducting membrane. This configuration is shown in Fig. 1, whilst its exploded representation is shown in Fig. 1a. In the centre of the system, there is the ion-exchange polymeric membrane (Fig. 1a - 1) on whose sides there are the anode electrode (Fig. 1a - 2) and the cathode electrode (Fig. 1a - 3). The micro-porous titanium wire cloth is positioned on both sides of the membrane (Fig. 1a - 4, 5) and everything is enclosed between the two metal plates (anode, Fig. 1a - 6 and cathode, Fig. 1a - 7). The titanium cloth and the plates work as the current collectors. The use of micro-porous wire meshes has a double aim: a) it creates a capillary structure on the whole electrode area to provide the transportation of the reagents and products involved in the water splitting reaction; b) it guarantees electric contact between the electrode and the metal plate, optimizing the electrode-plate adhesion to the interface. The metal plates (Fig. 4 - 6, 7) have a double function; they are: a) current collectors; and b) modulators of the flows coming into and going out of the electrolytic cell. The distribution of the reagents and products from and to the active sites is optimized by creating channels on one of the faces of these plates; both the quantity and the dimension of these channels can vary. The channels (Fig. 4-6) are more numerous on the anode plate in comparison to the channels present on the cathode plate (Fig. 4 - 7) because of the water flow entering the anode. The geometrical details of the channels made on the anode and cathode plates are respectively shown in Fig. 4a and in Fig. 4b. The membrane assembly is completed by screwing a threaded pin onto both metal plates (Fig. 1a - 8, 9), which allows one to connect the external power supply. The assembled electrode configuration is inserted in the nucleus (Fig. 2). The nucleus anode section is made up of an O-Ring (Fig. 2a - 10), a rectangular section Teflon seal (Fig. 2a - 11), a rectangular section rubber seal (Fig. 2a - 12) and a circular component of dielectric material (Fig. 2a - 16). Three holes (Fig. 2 - Holes A1, A2, A3) are present on component 16. The hole A1 allows one to feed the MEA with water. The hole A2 allows excess water to flow out as well as any oxygen created during the electrolysis process. Finally, the hole A3 allows the threaded pin screwed to the anode metal plate to cross the dielectric component. The cathode section of the insulating compartment comprises of an O-Ring (Fig. 2a - 13), a rectangular section Teflon seal (Fig. 2a - 14), a rectangular section rubber seal (Fig. 2a - 15) and a circular component of dielectric material (Fig. 2a - 17). Two holes (Fig. 2a - Holes C1, C2) are present on the component of Fig. 2a. The hole C1 allows the discharge of produced gaseous hydrogen and the electro-permeate water through the membrane during the electrolysis process. The hole C2 allows for the threaded pin, screwed to the cathode metal plate, to cross the dielectric component. All the seals of the nucleus shown in Fig. 2a allows the nucleus to maintain pressure, avoiding any leakages of water, oxygen and hydrogen from the cell. This configuration allows one to reach a hydrogen pressure up to 20 bar without any gas discharge. The Teflon seals (Fig. 2a - 11, 14) prevents the rectangular section seals (Fig. 2a - 12, 15) from adhering to the MEA (Fig. 1a - 1). Indeed, the seals guarantee a perfect insulation of the interface and, in the event of extraordinary maintenance of the cell, they facilitate the removal of the electrode configuration and the membrane from the nucleus. We would like to underline that the above-described nucleus has a double function as it works both as a thermal insulator and as an electrical insulator. The low thermal constant of the nucleus material (between 0.2 and 1 W·(m·K)⁻¹), allows one to recover a large amount of the thermal energy developed during water electrolysis inside the cell. This thermal energy is transferred to the MEA and to the water in the cell and raises the internal temperature of the electrode configuration so that the catalytic activity of the electro-catalyser is greatly improved. This way, the electrolysis cell's ohmic resistance is decreased and the cell efficiency is improved. Furthermore, the heating of the MEA and water increases the kinetic constants of electrochemical reactions both from reduction (1) and oxidation (2) and greatly improves the device's performances. The use of materials with a dielectric constant equal or lower than 2.8 (at 25 °C and at 1 kHz) allows one to obtain nuclei that are perfectly insulated from the electrical point of view. Therefore, the use of an electrically insulated nucleus, such as the one we are describing here, eliminates all the possibilities to accidentally disperse the electric current in the cell either during the operational phase or in the assembly phase. Indeed, in this device the metal plates are inserted inside the nucleus and are not in contact with the external environment as it is in the traditional electrolysis cells. To conclude, the invention's electrode configuration we have described is insulated from the external environment both thermally and electrically. The cell's electrical supply occurs through the threaded pins, which are screwed onto the metal plates (Fig. 1a - 8, 9) and connected to the device's electronic board through power cables. The nucleus, (Fig. 2) which contains the housing of the membrane (Fig. 1), is then inserted in the shell (Fig. 3). The shell, which allows one to make the cell's mechanical seals is divided into two sections: a) anode section (Fig. 3 - 18); b) cathode section (Fig. 3 - 19). The anode section is comprised of three components: 1) a circular ring nut (Fig. 3a - 20); 2) a metal disk (Fig. 3a - 21); e 3) a metal washer (Fig. 3a - 22). The metal disk (Fig. 3a - 21) is screwed onto the circular ring nut (Fig. 3a - 20). The circular ring nut has eight passing holes (Fig. 3a - 23) where the closing screws of the electrolytic cells will be placed. Two other passing threaded holes are present on the circular ring (Fig. 3a - Holes 24, 25) which are aligned to the holes of the nucleus (Fig. 2a - Holes A1, A2). A union holding the rubber (Fig. 3a - PA1) is screwed onto one of the holes of the circular ring nut (Fig. 3a - Hole 24); the union is equipped with an O-Ring seal (Fig. 3a - 26). This union allows one to supply the nucleus of the electrolytic cell with water. On the other hole of the circular ring nut (Fig. 3a - Hole 25), a union holding rubber (Fig. 3a - PA2) is screwed on and equipped with a seal O-Ring (Fig. 3a - 27). This union allows for the discharge of excess water and oxygen produced from the cell's nucleus. The metal washer (Fig. 3a - 22) is inserted around the threaded pin, (Fig. 1a - 8) which is screwed onto the metal anode plate. Also the cathode support structure is comprised of three components: 1) a circular ring nut (Fig. 3b - 28); 2) a metal disk (Fig. 3b - 29); e 3) a metal washer (Fig. 3b - 30). The metal disk (Fig. 3b - 29) is screwed onto the circular ring nut (Fig. 3b - 28). Eight threaded holes (Fig. 3b - 31) are present on the circular ring nut (Fig. 3b - 31); the holes are used to fix the cell's closing screws. In this ring nut (Fig. 3b - 28), there is a threaded passing hole (Fig. 3b - Hole 32) which is aligned with the nucleus hole (Fig. 2a - Hole C1). The threaded hole is used to tighten a union (Fig. 3b - IC1) equipped with a fast coupling (Fig. 3b - IC2) and an O-Ring seal (Fig. 3b - 33). This union allows for the discharge of gaseous hydrogen from the cell nucleus and the electro-permeate water through the membrane. The metal washer of Fig. 3b - 30 is inserted around the threaded pin shown in Fig. 1a - 9, which is screwed onto the metal cathode plate. The anode and cathode sections are fixed, one to another, by means of eight screws that pass through the passing holes shown in Fig. 3a - 26 and are fixed to the threaded holes shown in Fig. 3b - 31. The cell is hermetically closed by tightening these screws so that the device will be tight. The assembly of a MEA in an electrode configuration inserted inside a nucleus of dielectric material prevents, during the closing phase, the insulation of the tightening screws. In fact, in the cell of this invention, the current collectors are never in contact with the metal support structures. Therefore, the electrolysis cell described in this invention is the result of the assembly of three principal sections: a) the housing of the MEA (Fig. 1); b) the nucleus (Fig. 2); and c) the shell (Fig. 3). This configuration is very flexible; if one of the cell parts breaks, it is easy to replace it and recover the other components. The breakage of the membrane is the main cause for any electrolysis cell malfunctioning. Usually the damage remains in the membrane and/or in the components that are in contact with the membrane. In that case, to solve the problems of the cell we propose here, it is sufficient to replace the housing of the membrane and recover the dielectric block and the shell. In the event that the dielectric materials are also damaged, the shell can be recovered. Therefore, the cell considered in this invention allows for specific and inexpensive repairs to be performed, so that both the time and cost of technical assistance can be limited. The above-described electrolysis cell is the centre of a more complex device which is made up of a set of sections that make the cell operate effectively. The system, which includes the cell and all sections for flow modulation and machine parameter control is named "Hydrogen generator." Fig. 5 shows the hydrogen generator's flowchart. The device is comprised of seven blocks: electrolysis cells (block A); the water supply tank (block B); the devices that separate gas/liquid (block C); the control sensors (block D); the system that manages the flows (block E); the purification columns (block F); the electronic board and the display (block G). Block A includes the electrolysis cells. The number of cells in the hydrogen generator depends on the final flow of hydrogen to be produced. The electrolysis cells are supplied with very clean water coming from the supply tank inside the machine. Block B is comprised of the water supply tank and all pipes to supply the cells of block A. Block C includes the three following gas/liquid separators: a) the system to separate water and oxygen; and b) the two devices for water/hydrogen separation. During the operation, oxygen is produced in the anode. The produced gaseous oxygen and excess liquid water are delivered to the gas/liquid separator. Generally, oxygen is dispersed in the environment while water is recycled into the supply tank. Hydrogen is produced at the cathode where electro-permeate water also accumulates through the ion-exchange membrane. The cathode flow flows inside a gas/liquid separator which separates gaseous hydrogen from liquid water. This separator works under high pressure and is equipped with a floating device that allows the automatic drainage of water. Drainage is possible, thanks to hydrogen pressure, and it does not compromise the system pressure stability. The obtained water is degassed again from the hydrogen in another gas/liquid separator. The gas obtained from these two last degassing processes is released into the external environment while water is recycled and reintroduced in the supply tank in block B. High pressure hydrogen coming out from the gas/liquid separator is delivered to block E, which includes the solenoid valves and the relevant devices for the management of the flow parameters of the produced gas. Hydrogen coming out from block E is introduced into the purification columns, which make block F. These columns are based on drying mixtures, such as molecular sieves, catalysers, silica gels, zeolites, etc. which are able to purify and dehydrate hydrogen efficiently. The regeneration of the purification columns is performed automatically: while a column operates, the other is warmed to allow the evaporation of the components kept during the purification process. In this way, the machine can work continuously so that breaks and maintenance interventions for the regeneration of the purification columns can be avoided. Purified hydrogen comes back to block E and then it is taken to the desired pressure at the generator output. Blocks D and G manage the operation of the whole generator. Block D is made up of sensors that monitor: a) the internal pressure of gases and liquids; b) output gas pressure; c) the temperature of the purification columns; and d) the purity and level of water. The data detected by the sensors are sent to the electronic board within block G, which processes the input signals and modulates the hydrogen production according to the given settings. Moreover, the electronic board manages a) solenoid valves; b) cooling fans and c) the water supply flow. The board is connected to a graphic display, which allows the setting and displaying of device parameters. The electronic board and the display comprise block G. The simultaneous and correlated functionality of blocks D and E allows one to detect possible anomalies that may occur in the machine and it warns the user through acoustic signals or visual signals on the display. If serious anomalies are detected, the machine stops automatically to guarantee safety to the place where it is installed.

### Short descriptions of the figures

**Fig. 1****.** Electrode configuration showing the membrane housing.
**Fig. 1a****.** Exploded view of the membrane housing.
**Fig. 2****.** View of the nucleus based on dielectric materials. The electrode configuration is inserted in the dielectric nucleus.
**Fig. 2a****.** Exploded view of the nucleus.
**Fig. 3****.** View of the cell shell.
**Fig. 3a****.** Exploded view of the shell's anode section.
**Fig. 3b****.** Exploded view of the shell's cathode section.
**Fig. 4****.** View of metal anode plates (6) and metal cathode plates (7).
**Fig. 4a****.** Detail of the channel structure on the metal anode plate.
**Fig. 4b****.** Detail of the channel structure on the metal cathode plate.
**Fig. 5****.** Hydrogen generator flowchart.

## Claims

1. An electrolyser based on one "nucleus-shell" cell for the conversion of electrical energy into hydrogen comprising:
- a "nucleus" (1-9) of the cell, based on a highly dielectric material, which encases the electrode configuration;
- a "shell" (18, 19), which envelops the dielectric nucleus guaranteeing the sealing of the cell;
**characterized in that** the nucleus (1-9) is based on a dielectric material with the following properties:
- a permittivity at 25°C and 1 kHz which is lower than 2.8;
- a thermal transfer coefficient between 0.2 and 1 W*(m*K)⁻¹.

2. An electrolyser as in claim 1, where the shell (18, 19) enveloping the dielectric nucleus (1-9) is made of a metallic, ceramic or polymeric structure capable to seal the nucleus of the cell so that the chamber of the dielectric block, which encases the electrode configuration, is kept at high pressure without gas leaks.

3. An electrolyser as in claim 1, where the dielectric nucleus is made of a polymeric, composite ceramic or hybrid inorganic-organic material.

4. An electrolyser as in claim 1 or 2, where the shell is made of any type of metallic material such as steel, Ti, alloys of Ni, Cu, Mn, Au, Ag or of ceramic, polymeric, composite, hybrid inorganic-organic materials capable to be formed into a cage for the dielectric nucleus; the material being **characterized by** a Young modulus larger than 50 GPa, a shear modulus larger than 18 GPa and a bulk modulus larger than 50 GPa.

5. An electrolyser as in claim 1, where the inner chamber encases an electrode configuration made of two current collectors (4-7) and a membrane-electrode (1-3) assembly (MEA).

6. An electrolyser as in claim 5, where the anodic and cathodic current collectors are made of metallic grids, plates, tissues or sponges based on Ti, Ni, Au, Pt.

7. An electrolyser as in claim 4, where the metallic shell supports the connectors for allowing: a) the entrance of water; b) the exit of oxygen and water; and c) the exit of hydrogen and water.

8. An electrolyser as in claim 6, where the current collectors consisting in metallic grids, plates, tissues or sponges based on Ti, Ni, Au, Pt which are in contact with the MEA, are supported on metallic plates (6, 7) for collecting current and for modulating the flows entering and exiting the cell.

9. An electrolyser as in claim 8, where the current collector plates (6, 7) include channels created on the surface of the plates for optimizing the transport of reagents and products to the MEA, the channels having a higher density on the anodic plate (6).

10. An electrolyser as in claim 1, including threaded pins (8, 9) piercing the dielectric nucleus and screwed to the metallic electrode plate (6, 7).

11. An hydrogen generator including an electrolyser according to one of the claims 1-10 and a water tank (B) for feeding said electrolyser with water.

12. An hydrogen generator including an electrolyser according to one of the claims 1-10 and gas/liquid separators (C) for purifying the gases produced through the water splitting reaction.

13. An hydrogen generator as in claim 12, where the gas/liquid separators (C) include a high-pressure water/hydrogen separator equipped with a buoy.

14. An hydrogen generator as in claim 12, comprising columns including desiccating agents such as molecular sieves, catalysts, silica gel, zeolites, for dehydrating high-pressure hydrogen coming from said gas/liquid separators (C).

15. An hydrogen generator including an electrolyser according to one of the claims 1-10 and sensors (D) for measuring: a) the internal pressure of the gases and of the liquids; b) the external pressure of the gas; c) the temperature of the purification column; and d) the purity and the level of the water.

16. An hydrogen generator including an electrolyser according to one of the claims 1-10 and an electronic board connected to a graphic display (G).

## Patentansprüche

1. Elektrolyseur basierend auf einer "Kern-Schale"-Zelle zur Umwandlung von elektrischer Energie in Wasserstoff, umfassend:
- einen "Kern" (1-9) der Zelle, basierend auf einem stark dielektrischen Material, das die Elektrodenkonfiguration umschließt;
- eine "Schale" (18, 19), die den dielektrischen Kern umhüllt und so die Versiegelung der Zelle sicherstellt;
**dadurch gekennzeichnet, dass** der Kern (1 -9) auf einem dielektrischen Material mit den folgenden Eigenschaften basiert:
- eine Permittivität bei 25 °C und 1 kHz, die geringer ist als 2,8;
- ein thermischer Transferkoeffizient zwischen 0,2 und 1 W*(m*K)⁻¹.

2. Elektrolyseur gemäß Anspruch 1, bei dem die Schale (18, 19), die den dielektrischen Kern (1-9) umschließt, aus einer metallischen, keramischen oder polymeren Struktur besteht, die den Kern der Zelle versiegeln kann, sodass die Kammer des dielektrischen Blocks, der die Elektrodenkonfiguration umschließt, bei einem hohen Druck ohne Gasaustritte gehalten wird.

3. Elektrolyseur gemäß Anspruch 1, wobei der dielektrische Kern aus einem polymeren, keramischen Komposit- oder anorganisch-organischen Hybridmaterial besteht.

4. Elektrolyseur gemäß Anspruch 1 oder 2, wobei die Schale aus jeglicher Art von metallischem Material besteht, wie etwa Stahl, Ti, Legierungen von Ni, Cu, Mn, Au, Ag oder aus keramischen, polymeren, Komposit- oder anorganisch-organischen Hybridmaterialien, das zu einem Käfig für den dielektrischen Kern geformt werden kann, wobei das Material durch ein E-Modul größer als 50 GPa, ein Schubmodul von größer als 18 GPa und ein Kompressionsmodul von größer als 50 GPa gekennzeichnet ist.

5. Elektrolyseur gemäß Anspruch 1, wobei die innere Kammer eine Elektrodenkonfiguration umschließt, die aus zwei Stromsammlern (4-7) und einer Membran-Elektroden-Einheit (MEA) (1-3) besteht.

6. Elektrolyseur gemäß Anspruch 5, wobei der anodische und kathodische Stromsammler jeweils aus Metallgittern, -platten, -geweben oder -schwämmen besteht, die auf Ti, Ni, Au, Pt basieren.

7. Elektrolyseur gemäß Anspruch 4, wobei die metallische Schale die Anschlüsse trägt, um: a) den Zutritt von Wasser, b) den Austritt von Sauerstoff und Wasser und c) den Austritt von Wasserstoff und Wasser zu erlauben.

8. Elektrolyseur gemäß Anspruch 6, wobei die Stromsammler, die aus auf Ti, Ni, Au, Pt basierenden Metallgittern, -platten, -geweben oder -schwämmen bestehen und die mit der MEA kontaktiert sind, von Metallplatten (6, 7) zum Sammeln von Strom und zum Modulieren der in die Zelle eintretenden und diese verlassenden Ströme getragen werden.

9. Elektrolyseur gemäß Anspruch 8, wobei die Stromsammelplatten (6, 7) Kanäle umfassen, die auf der Oberfläche der Platten erzeugt wurden, um den Transport von Reagenzien und Produkten zur MEA zu optimieren, wobei die Kanäle auf der anodischen Platte (6) eine höhere Dichte haben.

10. Elektrolyseur gemäß Anspruch 1, umfassend Gewindestifte (8, 9), die den dielektrischen Kern durchbohren und auf die metallische Elektrodenplatte (6, 7) geschraubt sind.

11. Wasserstofferzeuger, umfassend einen Elektrolyseur gemäß einem der Ansprüche 1 bis 10 und einen Wassertank (B) zum Speisen des genannten Elektrolyseurs mit Wasser.

12. Wasserstofferzeuger, umfassend einen Elektrolyseur gemäß einem der Ansprüche 1 bis 10 und Gas/Flüssigkeits-Separatoren (C) zum Reinigen der durch die Wasserspaltungsreaktion erzeugten Gase.

13. Wasserstofferzeuger gemäß Anspruch 12, wobei die Gas/Flüssigkeit-Separator (C) einen Hochdruck-Wasser/Wasserstoff-Separator umfassen, der mit einem Schwimmkörper ausgestattet ist.

14. Wasserstofferzeuger gemäß Anspruch 12, umfassend Säulen, die Trocknungsmittel wie etwa Molekularsiebe, Katalysatoren, Kieselgel, Zeolithe zum Entwässern von Hochdruck-Wasserstoff enthalten, der aus genannten Gas/Flüssigkeit-Seperatoren (C) kommt.

15. Wasserstofferzeuger, umfassend einen Elektrolyseur gemäß einem der Ansprüche 1 bis 10 und Sensoren (D) zum Messen: a) des Innendrucks der Gase und der Flüssigkeiten, b) des Außendrucks der Gase, c) der Temperatur der Reinigungssäule sowie d) der Reinheit und des Gehalts von Wasser.

16. Wasserstofferzeuger, umfassend einen Elektrolyseur gemäß einem der Ansprüche 1 bis 10 und eine elektronische Platine, die mit einer graphischen Anzeige (G) verbunden ist.

## Revendications

1. Electrolyseur basé sur une cellule à « enceinte-noyau » pour la conversion d'une énergie électrique en hydrogène comprenant :
- un « noyau » (1 à 9) de la cellule, à base d'un matériau hautement diélectrique, qui renferme la configuration d'électrodes ;
- une enceinte (18, 19), qui enveloppe le noyau diélectrique en garantissant l'étanchéité de la cellule ;
**caractérisé en ce que** le noyau (1 à 9) est à base d'un matériau diélectrique ayant les propriétés suivantes :
- une permittivité à 25 °C et 1 kHz qui est inférieure à 2,8 ;
- un coefficient de transfert thermique entre 0,2 et 1 W*(m*K)⁻¹.

2. Electrolyseur selon la revendication 1, dans lequel l'enceinte (18, 19) enveloppant le noyau diélectrique (1 à 9) est faite d'une structure métallique, céramique ou polymère capable de sceller le noyau de la cellule de façon que la chambre du bloc diélectrique, qui renferme la configuration d'électrodes, soit maintenue à une pression élevée sans fuite de gaz.

3. Electrolyseur selon la revendication 1, dans lequel le noyau diélectrique est fait d'un matériau polymère, céramique composite ou inorganique/organique hybride.

4. Electrolyseur selon la revendication 1 ou 2, dans lequel l'enceinte est faite de n'importe quel type de matériau métallique, tel que l'acier, Ti, les alliages de Ni, Cu, Mn, Au, Ag, ou de matériaux céramiques, polymères, composites, inorganiques/organiques hybrides capables d'être formés en cage pour le noyau diélectrique ; le matériau étant **caractérisé par** un module de Young supérieur à 50 GPa, un module de cisaillement supérieur à 18 GPa et un module de compressibilité supérieur à 50 GPa.

5. Electrolyseur selon la revendication 1, dans lequel la chambre interne renferme une configuration d'électrodes faite de deux collecteurs de courant (4 à 7) et d'un ensemble électrode à membrane (1 à 3) (MEA).

6. Electrolyseur selon la revendication 5, dans lequel les collecteurs de courant anodique et cathodique sont faits de grilles, plaques, tissus ou éponges métalliques à base de Ti, Ni, Au, Pt.

7. Electrolyseur selon la revendication 4, dans lequel l'enceinte métallique supporte les connecteurs pour permettre : a) l'entrée d'eau ; b) la sortie d'oxygène et d'eau ; et c) la sortie d'hydrogène et d'eau.

8. Electrolyseur selon la revendication 6, dans lequel les collecteurs de courant constitués de grilles, plaques, tissus ou éponges métalliques à base de Ti, Ni, Au, Pt, qui sont en contact avec le MEA, sont supportés sur des plaques métalliques (6, 7) pour collecter le courant et pour moduler les flux entrant et sortant de la cellule.

9. Electrolyseur selon la revendication 8, dans lequel les plaques de collecteur de courant (6, 7) comportent des canaux créés sur la surface des plaques pour optimiser le transport des réactifs et des produits vers le MEA, les canaux ayant une densité plus élevée sur la plaque anodique (6).

10. Electrolyseur selon la revendication 1, comportant des tiges filetées (8, 9) pénétrant dans le noyau diélectrique et vissées à la plaque d'électrode métallique (6, 7).

11. Générateur d'hydrogène comportant un électrolyseur selon l'une quelconque des revendications 1 à 10 et une cuve d'eau (B) pour alimenter en eau ledit électrolyseur.

12. Générateur d'hydrogène comportant un électrolyseur selon l'une quelconque des revendications 1 à 10 et des séparateurs de gaz/liquide (C) pour purifier les gaz produits par l'intermédiaire de la réaction de fractionnement de l'eau.

13. Générateur d'hydrogène selon la revendication 12, dans lequel les séparateurs de gaz/liquide (C) comportent un séparateur d'eau/hydrogène à haute pression équipé d'une bouée.

14. Générateur d'hydrogène selon la revendication 12, comprenant des colonnes comportant des agents de dessiccation, tels que des tamis moléculaires, des catalyseurs, un gel de silice, des zéolithes, pour déshydrater l'hydrogène à haute pression provenant desdits séparateurs de gaz/liquide (C).

15. Générateur d'hydrogène comportant un électrolyseur selon l'une quelconque des revendications 1 à 10 et des capteurs (D) pour mesurer : a) la pression interne des gaz et des liquides ; b) la pression externe du gaz ; c) la température de la colonne de purification ; et d) la pureté et le niveau de l'eau.

16. Générateur d'hydrogène comportant un électrolyseur selon l'une quelconque des revendications 1 à 10 et une carte électronique connectée à un affichage graphique (G).
